# EUROPEAN PATENT APPLICATION

(11) **EP 3 789 849 A1**
(43) Date of publication of application: **10.03.2021**
(21) Application number: 20179177.9
(22) Date of filing: 10.06.2020
(51) Int. Cl.: G06F 3/01, G06F 3/03

(54) **CONTACTLESS GESTURE CONTROL METHOD, APPARATUS AND STORAGE MEDIUM**

(30) Priority: 09.09.2019 CN 201910848794
(71) Applicant: Beijing Xiaomi Mobile Software Co., Ltd., Beijing 100085 (CN)
(72) Inventor: YANG, Jian, Beijing, Beijing 100085 (CN); DOU, Zifei, Beijing, Beijing 100085 (CN); ZHU, Dan, Beijing, Beijing 100085 (CN)
(74) Representative: dompatent von Kreisler Selting Werner - Partnerschaft von Patent- und Rechtsanwälten mbB

(57) **Abstract**

A contactless gesture control method, applied to a terminal equipped with a full-time working sensor, includes: detecting a contactless gesture by the full-time working sensor; acquiring an application operation instruction corresponding to the contactless gesture when the contactless gesture is detected by the full-time working sensor; and executing the application operation instruction.

## Description

### BACKGROUND

Contactless gesture control, e.g., controlling by hand or body gesture at a distance from a terminal, is a control method that has been developed rapidly in recent years, and is mainly applied to smart terminal devices. A contactless operation though a human-computer interaction interface can improve user experience in smart terminal device operations.

### SUMMARY

The present disclosure relates generally to the field of smart control technologies, and more specifically to a contactless gesture control method, apparatus, and storage medium.

According to a first aspect of the present disclosure, there is provided a contactless gesture control method, applied to a terminal equipped with a full-time working sensor, and the contactless gesture control method includes: detecting a contactless gesture by the full-time working sensor; acquiring an application operation instruction corresponding to the contactless gesture when the contactless gesture is detected by the full-time working sensor; and executing the application operation instruction.

Preferably, the detecting a contactless gesture by the full-time working sensor includes: triggering the full-time working sensor to detect a contactless gesture if an object change is detected by the full-time working sensor within a designated distance range from the terminal.

Preferably, it is determined that the object change is detected within the designated distance range from the terminal if a change in light and/or brightness is detected by the full-time working sensor within the designated distance range from the terminal.

Preferably, the contactless gesture control method further includes: recording in advance a contactless gesture that is matched with an application operation instruction, wherein the application operation instruction is one or more, and different contactless gestures correspond to different application operation instructions.

Preferably, the contactless gesture control method further includes: matching the contactless gesture detected by the full-time working sensor with the contactless gesture that is recorded in advance; and prompting a gesture inputting error information when it is detected by the full-time working sensor that the contactless gesture does not match the contactless gesture recorded in advance.

Preferably, the contactless gesture includes a static contactless gesture and/or a dynamic contactless gesture.

Preferably, said detecting a contactless gesture by the full-time working sensor includes: detecting the contactless gesture by the full-time working sensor when the terminal is in a sleep state or an awake state.

Preferably, before executing the application operation instruction, the contactless gesture control method further includes: providing a confirmation interface for a user to select whether to execute the application operation instruction or not, and confirming that a confirmation instruction input by the user for confirming to execute the application operation instruction is received.

According to a second aspect of the present disclosure, there is provided a contactless gesture control apparatus which is applied to a terminal equipped with a full-time working sensor, and the contactless gesture control apparatus includes: a detection unit configured to detect a contactless gesture by the full-time working sensor; an acquisition unit configured to acquire an application operation instruction corresponding to the contactless gesture when the contactless gesture is detected by the full-time working sensor; and an execution unit configured to execute the application operation instruction.

Preferably, the detection unit is configured to trigger the full-time working sensor to detect a contactless gesture if an object change is detected by the full-time working sensor within a designated distance range from the terminal.

Preferably, it is determined that an object change is detected within a designated distance range from the terminal by the detection unit in the following way: determining that the object change is detected within the designated distance range from the terminal if a change in light and/or brightness is detected by the full-time working sensor within the designated distance range from the terminal.

Preferably, the contactless gesture control apparatus further includes: a record unit configured to record in advance a contactless gesture that is matched with an application operation instruction, wherein the application operation instruction is one or more, and different contactless gestures correspond to different application operation instructions.

Preferably, the contactless gesture control apparatus further includes: a matching unit configured to match the contactless gesture detected by the full-time working sensor with the contactless gesture that is recorded in advance; and the contactless gesture control apparatus further includes a prompting unit configured to prompt a gesture inputting error information when the it is detected by the full-time working sensor that contactless gesture does not match the contactless gesture recorded in advance.

Preferably, the contactless gesture includes a static contactless gesture and/or a dynamic contactless gesture.

Preferably, the detection unit is configured to detect the contactless gesture through the full-time working sensor when the terminal is in a sleep state or an awake state.

Preferably, the contactless gesture control apparatus further includes a display unit, and the display unit is configured to provide a confirmation interface for a user to select whether to execute the application operation instruction or not before the application operation instruction is executed, and the execution unit is configured to confirm, before executing the application operation instruction, that a confirmation instruction input by the user for confirming to execute the application operation instruction is received.

According to a third aspect of the present disclosure, there is provided a non-transitory computer-readable storage medium having stored thereon instructions that, when executed by a processor, causes the processor to perform any one of foregoing methods.

According to a fourth aspect of the present disclosure, there is provided an electronic device including a memory for storing instructions, and a processor configured to call the instructions to perform any one of the foregoing methods.

It is to be understood that both the foregoing general description and the following detailed description are merely exemplary and explanatory, and do not limit the present disclosure.

### BRIEF DESCRIPTION OF THE DRAWINGS

The accompanying drawings, which are incorporated in and constitute a part of this disclosure, illustrate embodiments consistent with the disclosure and, together with the description, serve to explain principles of various embodiments of the disclosure.
FIG 1 is a schematic diagram illustrating an effect of a contactless gesture according to some embodiments.
FIG. 2 is a flowchart illustrating a contactless gesture control method according to some embodiments.
FIG. 3 is a flowchart illustrating another contactless gesture control method according to some embodiments.
FIG. 4 is a flowchart illustrating another contactless gesture control method according to some embodiments.
FIG. 5 is a flowchart illustrating another contactless gesture control method according to some embodiments.
FIG. 6 is a block diagram of a contactless gesture apparatus according to some embodiments.
FIG. 7 is a block diagram of an apparatus according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

A contactless gesture control can be based on a motion capture technology of a camera in a smart terminal device. When the contactless gesture control is performed on the smart terminal device, the camera is used to recognize the contactless gesture, thereby triggering an operation instruction or a special effect corresponding to the contactless gesture.

The use of the camera in the smart terminal device for the contactless gesture control is limited to the fact that a camera application must be started. When the camera application is not started, the contactless gesture control cannot be achieved. Therefore, the method for controlling the terminal by using contactless gestures needs to be further improved, so as to further improve the convenience of the smart terminal device operations.

For example, in a scenario, the use of contactless gestures can trigger some special animation effects by recognizing some specific contactless gestures during the photo preview or video recording.

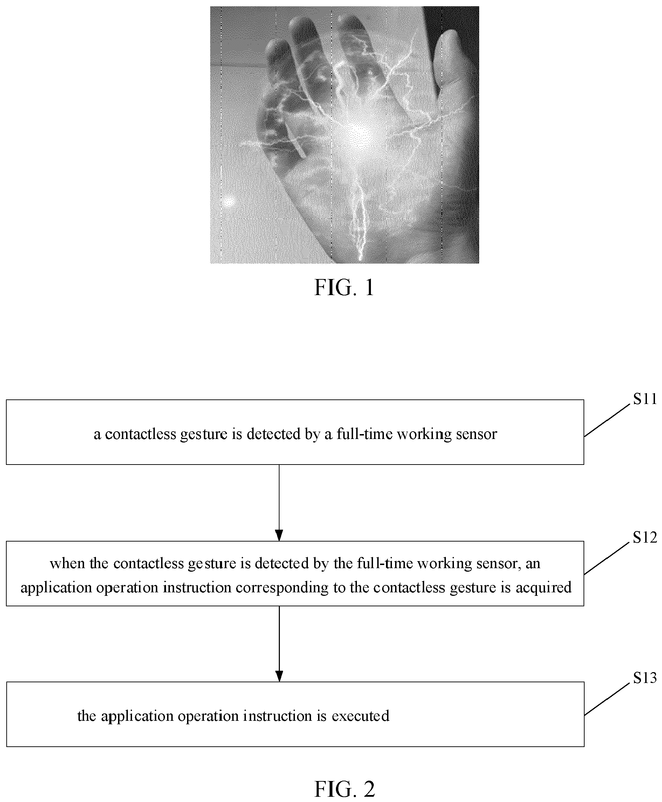

FIG. 1 illustrates a schematic diagram of an effect of a contactless gesture. Referring to FIG. 1, in an Augmented Reality (AR) function of a smart terminal device (such as a mobile phone), a lightning effect appears when a specific contactless gesture is recognized. The recognition of the contactless gesture may be limited to the fact that a camera application must be started in a conventional apparatus, and the function cannot be implemented when the mobile phone is in a sleep state or the camera application is not started.

Various embodiments of the present disclosure can provide a terminal installed with a full-time working sensor, and to an application scenario in which a contactless gesture is used to control an application operation instruction.

In some embodiments described below, a terminal is sometimes referred to as a smart terminal device, where the terminal can be a mobile terminal, also referred to as user equipment (UE), a mobile station (MS), etc. The terminal can be a device that provides a voice and/or data connection to a user, or is a chip disposed within the device, such as a handheld device with a wireless connection function, a vehicle-mounted device, etc. Examples of terminals can include: mobile phones, tablets, laptops, PDAs, Mobile Internet Devices (MID), wearable devices, Virtual Reality (VR) devices, Augmented Reality (AR) devices, wireless terminals in industrial control, wireless terminals in unmanned driving, wireless terminals in remote surgery, wireless terminals in smart grid, wireless terminals in transportation security, wireless terminals in smart cities, and wireless terminal in smart homes, etc.

FIG. 2 is a flowchart illustrating another contactless gesture control method according to some embodiments. As shown in FIG. 2, the contactless gesture control method is applied to a terminal, and the terminal is equipped with a full-time working sensor. The contactless gesture control method includes steps S11 to S13.

In step S11, a contactless gesture is detected by a full-time working sensor.

The full-time working sensor involved in some embodiments of the present disclosure can also be referred to as an "always on sensor." As long as the terminal is in a power-on state, that is, no matter the terminal is in an awake state or in a sleep state, the full-time working sensor can always work in a low power mode. Herein, the awake state of the terminal can include a screen-on state of the terminal. In the awake state, an application installed on the terminal can be started at any time based on a user operation and executed. An application in the background can also be called, based on the user operation, to the foreground for operation. The sleep state of the terminal can include a screen-off state of the terminal. In the sleep state, the terminal is in a state where the program is not running and the screen is off.

In some embodiments of the present disclosure, the contactless gesture can be a static contactless gesture, such as a static gesture of "V" or a static gesture of "fist." The contactless gesture can also be a dynamic contactless gesture, such as writing a letter "L" or "C" within a predetermined distance range from the terminal.

It can be understood that the contactless gesture control method of the present disclosure utilizes contactless gestures to operate and control applications without clicking on the screen. Therefore, in order to make it easier for the user to control the terminal, for example, the user can make a contactless gesture when wearing gloves that cannot be sensed by the screen.

In step S12, when the contactless gesture is detected by the full-time working sensor, an application operation instruction corresponding to the contactless gesture is acquired.

In some embodiments of the present disclosure, the application can be an application provided by the system or an installed third-party application program.

When a contactless gesture is detected by the full-time working sensor, an application operation instruction corresponding to the contactless gesture is acquired, based on the contactless gesture. The contactless gesture in some embodiments of the present disclosure can be a predetermined contactless gesture that uniquely corresponds to the application operation instruction in the terminal and is unchangeable. Herein, different contactless gestures in some embodiments of the present disclosure can correspond to different application operation instructions in one application. For example, a contactless gesture of "V" corresponds to turning on the camera, and a contactless gesture of "gripping fist" corresponds to turning off the camera. The different contactless gestures in some embodiments of the present disclosure can also correspond to operation instructions in different applications. For example, a contactless gesture of "five fingers close together" corresponds to waking up the phone, and the contactless gesture of "five fingers spread" corresponds to turning on the flashlight.

In step S13, the application operation instruction is executed.

In some embodiments, when an application operation instruction corresponding to the contactless gesture is acquired, the application operation instruction is executed. When no application operation instruction corresponding to the contactless gesture is acquired, the application operation instruction is not executed.

In some embodiments of the present disclosure, the full-time working sensor operated in the low power mode reduces the power consumption of the terminal. The full-time working sensor can detect contactless gestures, and based on the detected contactless gestures, the application operation instructions corresponding to the contactless gestures can be acquired and executed, thereby improving the convenience of terminal operations and enhancing the user experience.

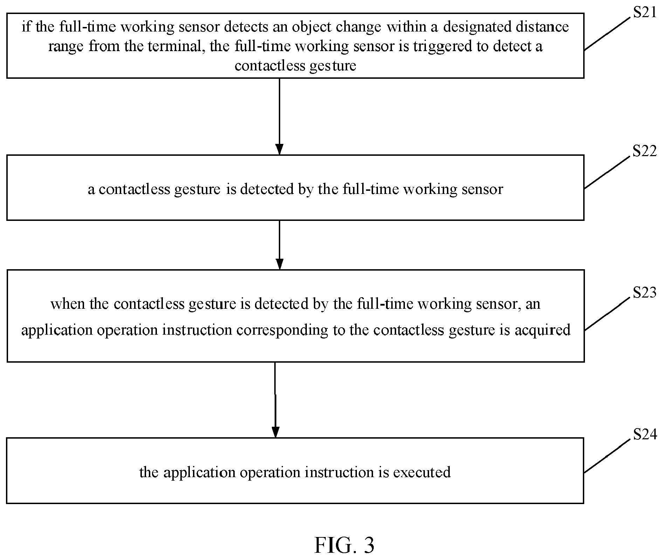

FIG. 3 is a flowchart illustrating another contactless gesture control method according to some embodiments. Referring to FIG. 3, a contactless gesture control method is applied to a terminal, and the terminal is equipped with a full-time working sensor. The contactless gesture control method includes steps S21 to S24.

In step S21, if the full-time working sensor detects an object change within a designated distance range from the terminal, the full-time working sensor is triggered to detect a contactless gesture.

In some embodiments of the present disclosure, the full-time working sensor is used to detect whether there is an object change within a predetermined distance range from the terminal, and after the full-time working sensor detects that there is an object change within the predetermined distance range from the terminal, the full-time working sensor is triggered to detect a contactless gesture.

In some embodiments, it is determined that the object change is detected within the designated distance range from the terminal if a change in light and/or brightness is detected by the full-time working sensor within the designated distance range from the terminal. Herein, the designated distance range can be a distance range in which the full-time working sensor can detect and recognize changes in light and/or brightness.

In step S22, a contactless gesture is detected by the full-time working sensor.

In step S23, when the contactless gesture is detected by the full-time working sensor, an application operation instruction corresponding to the contactless gesture is acquired.

In step S24, the application operation instruction is executed.

In some embodiments of the present disclosure, the full-time working sensor is used to detect a change in light and/or brightness within a predetermined distance range from the terminal, so as to trigger the full-time working sensor to detect a contactless gesture, thereby realizing a high-sensitivity detection of the object change and further realizing a high-sensitivity detection of contactless gestures.

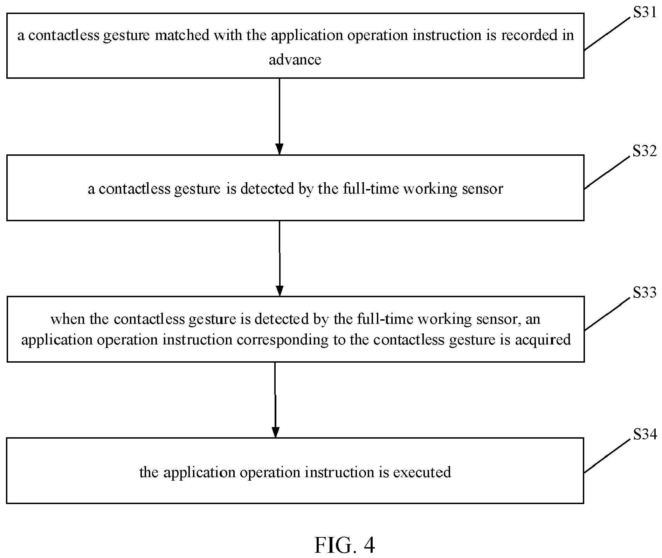

FIG. 4 is a flowchart illustrating another contactless gesture control method according to some embodiments. Referring to FIG. 4, a contactless gesture control method is applied to a terminal, and the terminal is equipped with a full-time working sensor. The contactless gesture control method includes steps S31 to S34.

In step S31, a contactless gesture matched with the application operation instruction is recorded in advance.

In some embodiments of the present disclosure, a contactless gesture matched with an application operation instruction can be recorded in advance in a customized manner, so as to predetermine a contactless gesture. On the one hand, the contactless gesture recorded in advance and matched with an application operation instruction in some embodiments of the present disclosure can be directed to different application operation instructions in one application. On the other hand, contactless gestures matched with application operations in some embodiments of the present disclosure can also be established respectively for the different application operations to be performed, that is, the different application operations are matched with the different contactless gestures.

In step S32, a contactless gesture is detected by the full-time working sensor.

In step S33, when the contactless gesture is detected by the full-time working sensor, an application operation instruction corresponding to the contactless gesture is acquired.

The contactless gesture detected by the full-time working sensor is matched with the contactless gesture recorded in advance, and when it is detected by the full-time working sensor that the contactless gesture matches the contactless gesture recorded in advance successfully, the application operation instruction corresponding to the contactless gesture is acquired. When it is detected by the full-time working sensor that the contactless gesture does not match the contactless gesture recorded in advance, a gesture inputting error information is prompted.

In step S34, the application operation instruction is executed.

In some embodiments of the present disclosure, by matching the detected contactless gesture with the contactless gesture recorded in advance, and acquiring the application operation instruction corresponding to the contactless gesture when it is detected by the full-time working sensor that the contactless gesture matches the contactless gesture recorded in advance successfully, the accuracy of capturing and recognizing the contactless gestures can be improved. When it is detected by the full-time working sensor that the contactless gesture does not match the contactless gesture recorded in advance, a gesture inputting error information is prompted to remind the user, thereby further improving the user experience.

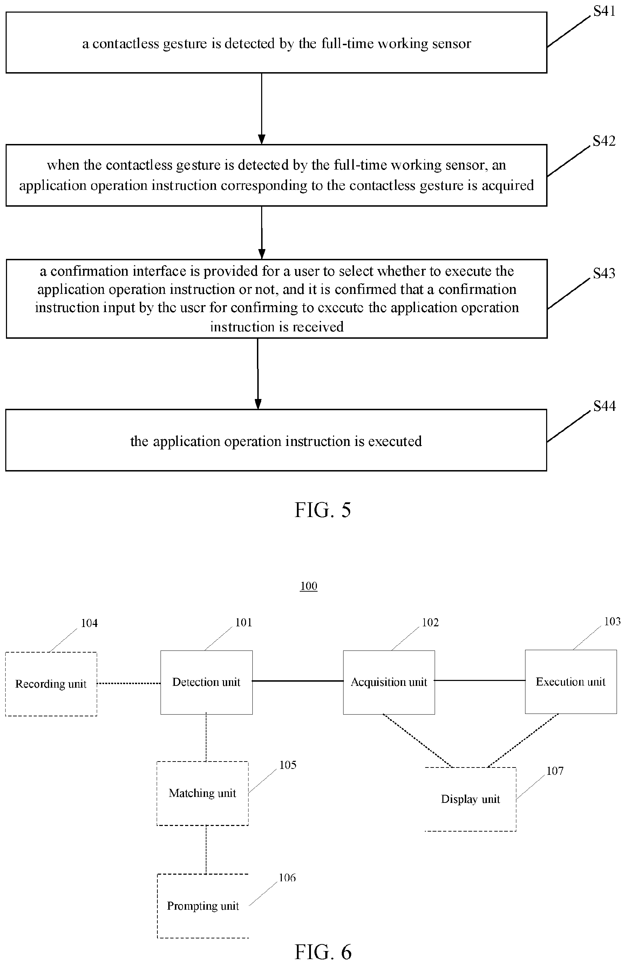

FIG. 5 is a flowchart illustrating another contactless gesture control method according to some embodiments. Referring to FIG. 5, a contactless gesture control method is applied to a terminal, and the terminal is equipped with a full-time working sensor. The contactless gesture control method includes steps S41 to S44.

In step S41, a contactless gesture is detected by the full-time working sensor.

In step S42, when the contactless gesture is detected by the full-time working sensor, an application operation instruction corresponding to the contactless gesture is acquired.

In step S43, a confirmation interface is provided for a user to select whether to execute the application operation instruction or not, and it is confirmed that a confirmation instruction input by the user for confirming to execute the application operation instruction is received.

In some embodiments, when a contactless gesture is detected by a full-time working sensor to obtain an application operation instruction corresponding to the contactless gesture, a confirmation interface is provided for the user to select whether to execute an application operation instruction or not, so as to prevent the user from confusing the application operation instruction corresponding to the contactless gesture on the one hand, and to prevent the user from operating the contactless gesture by mistake on the other hand. After the user confirms the confirmation instruction of executing the application operation instruction, the application operation instruction corresponding to the contactless gesture is executed.

In step S44, the application operation instruction is executed.

In some embodiments of the present disclosure, by providing a confirmation interface for the user to select whether to execute an application operation instruction or not, it is possible to prevent the user from confusing the application operation instruction corresponding to the contactless gesture, and to prevent the user from operating the contactless gesture by mistake, thereby further improving the accuracy of recognizing the contactless gestures.

FIG. 6 is a block diagram of a contactless gesture apparatus 100 according to some embodiments. Referring FIG. 6, the contactless gesture control apparatus includes a detection unit 101, an acquisition unit 102, and an execution unit 103.

The detection unit 101 is configured to detect a contactless gesture by the full-time working sensor; the acquisition unit 102 is configured to acquire an application operation instruction corresponding to the contactless gesture when the contactless gesture is detected by the full-time working sensor; and the execution unit 103 is configured to execute the application operation instruction.

In some embodiments, the detection unit 101 is configured to trigger the full-time working sensor to detect a contactless gesture if an object change is detected by the full-time working sensors within a designated distance range from the terminal.

In some embodiments, the detection unit 101 is configured to determine in the following way that an object change is detected within a designated distance range from the terminal: determining that the object change is detected within the designated distance range from the terminal if the a change in light and/or brightness is detected by full-time working sensor within the designated distance range from the terminal.

In some embodiments, the contactless gesture control apparatus further comprises: a record unit 104 configured to record in advance the contactless gesture matched with the application operation instruction, wherein the application operation instruction is one or more, and different contactless gestures correspond to different application operation instructions.

In some embodiments, the contactless gesture control apparatus further comprises: a matching unit 105 configured to match the contactless gesture detected by the full-time working sensor with the contactless gesture recorded in advance; and the contactless gesture control apparatus further comprises a prompting unit 106 configured to prompt a gesture inputting error information when it is detected by the full-time working sensor that the contactless gesture does not match the contactless gesture is recorded in advance.

In some embodiments, the contactless gesture comprises a static contactless gesture and/or a dynamic contactless gesture.

In some embodiments, the detection unit 101 is configured to detect the contactless gesture through the full-time working sensor when the terminal is in a sleep state or an awake state.

In some embodiments, the contactless gesture control apparatus further comprises a display unit 107, and the display unit 107 is configured to provide a confirmation interface for a user to select whether to execute the application operation instruction or not before the application operation instruction is executed by the execution unit, and the execution unit 103 is configured to confirm, before executing the application operation instruction, that a confirmation instruction input by the user for confirming to execute the application operation instruction is received.

With respect to the apparatuses in the above embodiments, the specific ways in which individual modules perform operations have been described in detail in the embodiments regarding the methods, and will not be described in detail here.

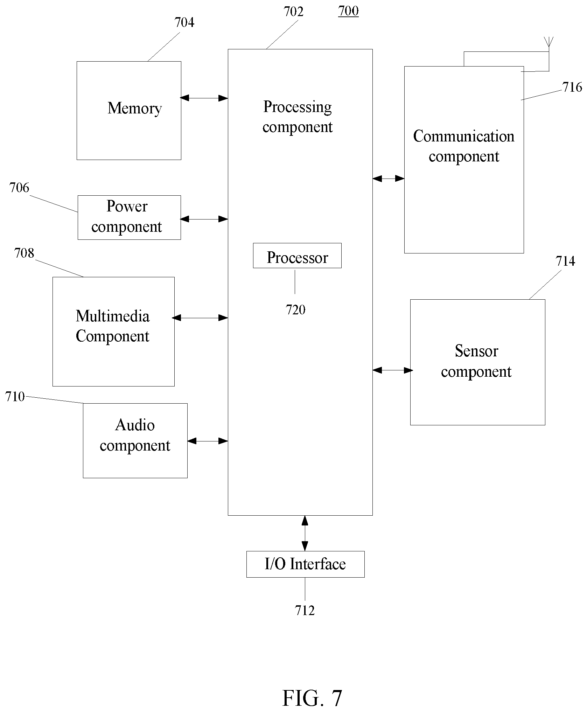

FIG. 7 is a block diagram of a contactless gesture control apparatus 700 illustrated according to some embodiments. For example, the device 700 can be a mobile phone, a computer, a digital broadcast terminal, a messaging device, a gaming console, a tablet, a medical device, a fitness equipment, a personal digital assistant, and the like.

Referring to FIG. 7, the apparatus 700 can include one or more of the following components: a processing component 702, a memory 704, a power component 706, a multimedia component 707, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 can include one or more processors 720 to execute instructions to perform all or part of the steps in the above described methods. Moreover, the processing component 702 can include one or more modules which facilitate the interaction between the processing component 702 and other components. For instance, the processing component 702 can include a multimedia module to facilitate the interaction between the multimedia component 707 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 can be implemented using any type of volatile or non-volatile memory apparatus, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 can include a power management system, one or more power sources, and any other components associated with the generation, management, and distribution of power for the apparatus 700.

The multimedia component 708 includes a screen providing an output interface between the apparatus 700 and the user. In some embodiments, the screen can include a liquid crystal display (LCD) and a touch panel (TP). In some embodiments, organic light-emitting diode (OLED) or other types of displays can be employed.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 708 includes a front camera and/or a rear camera. The front camera and the rear camera can receive an external multimedia datum while the apparatus 700 is in an operation mode, such as a photographing mode or a video mode. Each of the front camera and the rear camera can be a fixed optical lens system or have focus and optical zoom capability.

The audio component 710 is configured to output and/or input audio signals. For example, the audio component 710 includes a microphone ("MIC") configured to receive an external audio signal when the apparatus 700 is in an operation mode, such as a call mode, a recording mode, and a voice recognition mode. The received audio signal can be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons can include, but are not limited to, a home button, a volume button, a starting button, and a locking button.

The sensor component 714 includes one or more sensors to provide status assessments of various aspects of the apparatus 700. For instance, the sensor component 714 can detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 can include a proximity sensor configured to detect the presence of nearby objects without any physical contact. The sensor component 714 can also include a light sensor, such as a CMOS or CCD image sensor, for use in imaging applications. In some embodiments, the sensor component 714 can also include an accelerometer sensor, a gyroscope sensor, a magnetic sensor, a pressure sensor, or a temperature sensor.

The communication component 716 is configured to facilitate communication, wired or wirelessly, between the apparatus 700 and other apparatus. The apparatus 700 can access a wireless network based on a communication standard, such as Wi-Fi, 2G, 3G, 4G, 5G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In some embodiments, the apparatus 700 can be implemented with one or more application specific integrated circuits (ASICs), digital signal processors (DSPs), digital signal processing apparatus (DSPDs), programmable logic apparatus (PLDs), field programmable gate arrays (FPGAs), controllers, micro-controllers, microprocessors, or other electronic components, for performing the above described methods.

In some embodiments, there is also provided a non-transitory computer-readable storage medium including instructions, such as included in the memory 704, executable by the processor 720 in the apparatus 700, for performing the above-described methods. For example, the non-transitory computer-readable storage medium can be a ROM, a RAM, a CD-ROM, a magnetic tape, a floppy disc, an optical data storage apparatus, and the like.

In the contactless gesture control method and apparatus of the present disclosure, the full-time working sensor that can work in the low power mode reduces the power consumption of the terminal. Based on the detected contactless gestures, the application operation instructions corresponding to the contactless gestures can be acquired and executed, so that the application operation instructions can be executed on the terminal without contacting the terminal, thereby improving the convenience of terminal operations and enhancing the user experience.

In the contactless gesture control method and apparatus of the present disclosure, the full-time working sensor is used to detect a change in light and/or brightness within a designated distance range from the terminal, so as to trigger the full-time working sensor to detect a contactless gesture, thereby realizing a high-sensitivity detection of the object change and further realizing a high-sensitivity detection of contactless gestures.

In the contactless gesture control method and apparatus of the present disclosure, by matching a detected contactless gesture with a contactless gesture recorded in advance, and acquiring the application operation instruction corresponding to the contactless gesture when it is detected by the full-time working sensor that the contactless gesture matches the contactless gesture recorded in advance successfully, the accuracy of capturing and recognizing the contactless gestures can be improved.

In the contactless gesture control method and apparatus of the present disclosure, by providing a confirmation interface for the user to select whether to execute an application operation instruction or not, it is possible to prevent the user from confusing the application operation instruction corresponding to the contactless gesture, and to prevent the user from operating the contactless gesture by mistake, thereby further improving the accuracy of recognizing the contactless gestures.

In some embodiments, the mobile terminal, such as a mobile phone, has a camera having a first resolution that is suitable for image and video capturing, i.e., a high-resolution camera. The mobile terminal can have multiple such higher-resolution cameras, such as the front camera, the rear camera, etc. The mobile terminal can further have one or more display screens as described above.

The full-time working sensor can be a dedicated always-on camera having a second resolution that is lower than the first resolution. The resolution can be just sufficient for recognizing the contactless gestures. In some implementations, the dedicated camera can even be a single-pixel camera that senses the light variations sufficiently for recognizing the contactless gestures.

Various embodiments of the present disclosure can have one or more of the following advantages. A contactless gesture can be detected by a full-time working sensor. The full-time working sensor can be a dedicated sensor, such as a dedicated camera on the mobile terminal. Based on the contactless gesture, the application operation instruction corresponding to the contactless gesture can be acquired and executed, thereby improving user experience in terminal operations.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A contactless gesture control method, **characterized in that** it applied to a terminal equipped with a full-time working sensor, the method comprising:
detecting (S11) a contactless gesture with the full-time working sensor;
acquiring (S12) an application operation instruction corresponding to the contactless gesture when the contactless gesture is detected by the full-time working sensor; and
executing (S13) the application operation instruction.

2. The contactless gesture control method according to claim 1, wherein the detecting a contactless gesture by the full-time working sensor comprises:
triggering (S21) the full-time working sensor to detect a contactless gesture, upon an object change is detected by the full-time working sensor within a designated distance range from the terminal.

3. The contactless gesture control method according to claim 2, wherein it is determined that the object change is detected within the designated distance range from the terminal responsive to a change in at least one of light and brightness being detected by the full-time working sensor within the designated distance range from the terminal.

4. The contactless gesture control method according to any of claims 1 to 3, further comprising:
recording (S31) in advance a contactless gesture that is matched with an application operation instruction, wherein preferably more than one contactless gestures each matched with an application operation instruction are recorded in advance, more than one application operation instructions are used and different contactless gestures correspond to different application operation instructions.

5. The contactless gesture control method according to claim 4, further comprising:
matching the contactless gesture detected by the full-time working sensor with the contactless gesture recorded in advance; and
prompting a gesture inputting error information when it is detected by the full-time working sensor that the contactless gesture does not match the contactless gesture recorded in advance.

6. The contactless gesture control method according to any of claims 1 to 5, wherein the contactless gesture comprises at least one of a static contactless gesture and a dynamic contactless gesture.

7. The contactless gesture control method according to any of claims 1 to 6, wherein the detecting (S11) a contactless gesture with the full-time working sensor comprises:
detecting the contactless gesture with the full-time working sensor when the terminal is in one of a sleep state and an awake state.

8. The contactless gesture control method according to any of claims 1 to 7, wherein prior to the executing the application operation instruction, the method further comprises:
providing (S43) a confirmation interface for a user to select whether to execute the application operation instruction, and confirming (S43) that a confirmation instruction input by the user for confirming to execute the application operation instruction is received.

9. A contactless gesture control apparatus, **characterized in that** it applied to a terminal that is equipped with a full-time working sensor, the apparatus comprising:
a detection component (101), configured to detect a contactless gesture by the full-time working sensor;
an acquisition component (102), configured to acquire an application operation instruction corresponding to the contactless gesture when the contactless gesture is detected by the full-time working sensor; and
an execution component (103), configured to execute the application operation instruction.

10. The contactless gesture control apparatus according to claim 9, wherein the detection component (101) is configured to:
trigger the full-time working sensor to detect a contactless gesture upon an object change is detected by the full-time working sensor within a designated distance range from the terminal.

11. The contactless gesture control apparatus according to claim 10, wherein the detection component (101) is configured to determine that an object change is detected within a designated distance range from the terminal by:
determining that the object change is detected within the designated distance range from the terminal responsive to a change in at least one of light and brightness being detected by the full-time working sensor within the designated distance range from the terminal.

12. The contactless gesture control apparatus according to any of claims 9 to 11, wherein the contactless gesture control apparatus further comprises:
a record component (104), configured to record in advance a contactless gesture matched with an application operation instruction, wherein preferably more than one contactless gestures each matched with an application operation instruction are recorder in advance, more than one application operation instructions are used and different contactless gestures correspond to different application operation instructions.

13. The contactless gesture control apparatus according to claim 12, wherein the contactless gesture control apparatus further comprises:
a matching component (105), configured to match the contactless gesture detected by the full-time working sensor with the contactless gesture recorded in advance; and
the apparatus further comprises a prompting component (106) configured to:
prompt a gesture inputting error information when it is detected by the full-time working sensor that the contactless gesture does not match the contactless gesture recorded in advance.

14. The contactless gesture control apparatus according to any of claims 9 to 13, wherein the detection component (101) is configured to:
detect the contactless gesture through the full-time working sensor when the terminal is in one of a sleep state and an awake state.

15. A non-transitory computer-readable storage medium having instructions stored thereon for execution by a processor of a mobile terminal to cause the mobile terminal to perform the contactless gesture control method according to any of claims 1-8.
